# EUROPEAN PATENT SPECIFICATION

(11) **EP 3 280 268 B1**
(45) Date of publication and mention of the grant of the patent: **25.06.2025**
(21) Application number: 16719033.9
(22) Date of filing: 08.04.2016
(51) Int. Cl.: A23D 9/00, A23L 5/10, A21D 13/00, A21D 13/60

(54) **PROCESS FOR MANUFACTURING A DEEP-FRIED FOOD PRODUCT**
VERFAHREN ZUR HERSTELLUNG EINES FRITTIERTEN LEBENSMITTELPRODUKTS
PROCÉDÉ DE FABRICATION D'UN PRODUIT ALIMENTAIRE FRIT

(30) Priority: 10.04.2015 EP 15163274
(43) Date of publication of application: 14.02.2018
(73) Proprietor: Fuji Oil Europe, 9042 Gent (BE)
(72) Inventor: CLEENEWERCK, Bernard, 8301 Knokke-Heist (BE); ECHIM, Camelia, 9032 Wondelgem (BE); VERBEECK, Sabrina, 9130 Kieldrecht (BE); VANDERLINDEN, Bart, 9800 Deinze (BE)
(74) Representative: Gevers Patents
(86) International application number: PCT/EP2016/057836
(87) International publication number: WO 2016/162529

(56) References cited:
- EP-A2- 0 797 921
- JP-A- 2001 269 116
- US-A1- 2006 105 090
- A R ALI ET AL: "Effect of first stage dry fractionation on the quality of CBE based on palm oil and sal fat", ELAEIS, vol. 9, no. 1, 1 June 1997 (1997-06-01), pages 17 - 24, XP055218117, ISSN: 0128-1828
- S ADHIKARI ET AL: "Sal olein and mahua olein for direct edible use", JOURNAL OF THE AMERICAN OIL CHEMISTS' SOCIETY, vol. 66, no. 11, 1 November 1989 (1989-11-01), pages 1625 - 1630, XP055218380, ISSN: 0003-021X, DOI: 10.1007/BF02636190
- "The Lipid Handbook, 3rd edition", 13 March 2007, CPC PRESS, ISBN: 978-1-42-000967-5, article FRANK D GUNSTONE ET AL: "Occurrence and Characterisation of Oils and Fats", pages: 37 - 141, XP055218126
- L M SMITH ET AL: "Lipid content and fatty acid profiles of various deep-fat fried foods", JOURNAL OF THE AMERICAN OIL CHEMISTS' SOCIETY, vol. 62, no. 6, 1 June 1985 (1985-06-01), pages 996 - 999, XP055218346, ISSN: 0003-021X, DOI: 10.1007/BF02935700

## Description

### Field of invention

The present invention relates to a process for producing fried food products containing glyceride compositions, wherein said glyceride compositions contain a substantial amount of unsaturated fatty acids and reduced level of saturated fatty acids (SAFA), with an improved nutritional profile and reduced oil out properties. The present invention also relates to the use of the above glyceride composition as a frying oil or fat in a process for manufacturing a deep fried product.

### Background of the invention

Oils and fats are used in different applications, each having their own specific requirements. In particular, for applications such as frying or deep frying, the selected oils and fats need to provide several important characteristics to the fried or deep fried food products. Among important characteristics mention may notably be made of product appearance and nutritional requirements.

Traditionally, quite a number of hard fats such as lard have been used in frying. Nowadays more and more liquid oils are used, replacing hard fats such as notably animal fats, tropical vegetable fats or fats obtained through partial or full hydrogenation of soft fats and liquid oils from vegetable or animal origin. Partial hydrogenation has as the advantage that fats can be made in a very wide range of desired melting points. However, the big disadvantage is that in partial hydrogenation high amounts of trans unsaturated fatty acid residues (TFA) are generated, which have very negative health effects, like raising the bad LDL-cholesterol and reducing the good HDL-type, thereby creating a higher risk for cardiovascular diseases. For this reason use of partially hydrogenated oils and fats should be avoided.

Given the fact that liquid oils contain high amounts of unsaturated fatty acids, which are sensitive to oxidation, especially under the conditions of frying or deep frying whereby heating occurs to temperatures above 100 or 150°C, it is a challenge to maintain oxidative stability. Especially, in deep frying application, whereby the oil is used consecutive times before being disposed of.

Thus, in the frying application area there has been a quick and massive shift from the use of hard fats to liquid oils, and especially to liquid oils with a high content of mono-unsaturated fatty acids, like high oleic sunflower oil or palm olein obtained through single or double fractionation of palm oil. The fact that mono-unsaturated oils are less prone to oxidation than oils with a high content of polyunsaturated fatty acids, makes them a better fit for frying purposes.

For certain applications the use of palm olein gives quite satisfactory functional properties to deep fried products, like crispiness and a dry appearance. However, the use of palm olein in frying applications suffers the major drawback that it contains quite high amounts of SAFA, commonly between 38 and 48 wt %. Also the type of saturated fatty acid composition is not ideal since it mainly consists of palmitic acid residues which has an LDL-cholesterol increasing effect.

For example, EP 0 797 921 relates to palm-based frying fat and oil which has an improved non-dripping property while retaining high stability against oxidation and a good taste. To this purpose enzymatic ester exchange is applied to palm oil, palm oil fractions or blends of palm oil with a liquid oil, thereby using a lipase enzyme having no positional specificity. This results in an increase PPO/POP ratio, thought to be responsible for an improved non-dripping property. The fat and oil composition comprises 25 to 48%, preferably 30 to 40% saturated fatty acids and 40 to 60, preferably 44 to 54 % of mono-unsaturated fatty acids. Since the fat component is palm-based, the saturated fatty acids mainly consist of palmitic acid. This can be 88-89% relative to total SAFA, as demonstrated in the examples, the remaining part being mainly stearic acid.

Although the technical performance of these types of frying fat compositions seems to be good, it suffers some important problems from a nutritional point of view, in that they still contain relatively high amounts of SAFA, of which most of them is hypercholesterolemic (C16).

JP 09322708 discloses an oil and fat for frying donuts. The composition is a blend of unfractionated palm oil with vegetable oil. The saturated fatty acid content of the blend is less than 50%, of which however the major part is C16.

US 2006/0105090 describes compositions suitable for use as a frying fat or oil which show a reduced tendency to oil out from the fried food product and are less waxy. Said compositions are derived from palm oil which was preferably subjected to an interesterification process. There is no co-interesterification with another fat, like for instance with a lauric fat. However, these compositions may have a content of saturated fatty acids having from 12 to 24 carbon atoms (SAFA) of at least 53% by weight, and a content of unsaturated fatty acids having 18 carbon atoms of less than 47% by weight. According to even more preferable embodiments, the content of saturated fatty acids having from 12 to 24 carbon atoms (SAFA) is even at least 60%, while the content of C16:0 fatty acids (palmitic acid) is greater than 50%. This can be explained by the fact that the fat compositions need to be derived from palm oil. Such compositions typically have a C18:0/C16:0 ratio of less than 0.11, as demonstrated in the working examples of US 2006/0105090.

EP 0 806 146 A1 describes a fried food product which does not have an oily surface and is free from solidified fat on the surface that is visible with the naked eye. Said fried food product is prepared with a frying fat which is substantially free of trans unsaturated fatty acid residues (TFA), includes 0-6%, preferably 0-5%, more preferably 1-4% S3 triglycerides wherein S indicates saturated fatty acid residues, includes at least 20% S2O triglycerides wherein O indicates oleic acid residue and has a N20-N35 value of at least 25. However the frying fat of EP 0 806 146 A1 typically contains at least 45% SAFA and is preferably obtained by fractionation of an interesterified fat composition containing a fully hardened liquid oil, whereby an olein fraction is obtained with a melting point above 25°C, as can be seen from the N-values. This olein can be used as such as frying fat or it can be first blended with less than 20% liquid oil. As a consequence of this, the triglyceride composition of this frying fat contains less than 20% U3-triglycerides and the SAFA level is relatively high and quite comparable to the one of palm oil.

As said above, high oleic sunflower oil, also being a liquid oil with a high content of mono-unsaturated fatty acids, is quite stable to oxidation and has the advantage of having a very low SAFA content, typically between 5 and 10 wt %. However, the problem with his oil is that it does not always meet the functional properties, required for the final fried food product. In particular, high oleic sunflower oil may provide some deep fried products that get a too wet and/or sticky appearance, which make them less attractive. This aspect may be especially critical when said deep fried products are packaged in a transparent foil and risk to stick to the packaging material. Further, when said deep fried products are covered with a coating, like a sugar coating or a fat containing coating, for instance a chocolate coating, problems of poor adhesion might occur, or such a coating does not get evenly distributed or is more sticky or said coating gets confronted with quick "sweating". The latter is a known phenomenon whereby droplets appear on the surface of the coating. Without wishing to be bound by theory, this may be due to oil and/or water migration from the covered food product through the coating to the surface. Generally the higher the risk for sweating, the shorter the shelf life that can be guaranteed for the final fried product.

Another oil that can be used for frying is for example shea olein and/or randomized shea olein as notably described in US-A-6 227 433 and WO 2006/061100 A1. US-A-6 227 433 describes the good frying behaviour of randomised shea olein having a reduced decomposition of the components in the oil. WO 2006/061100 A1 describes an edible oil composition comprising 33 wt %, preferably more than 50 wt %, most preferably more than 75 wt % of shea olein and one or more oils chosen from the group of rapeseed oil, soybean oil, sunflower oil or any fraction of these oils or palm olein, and its use as frying oil. When using said edible oil composition for the manufacturing of frying food products, in particular shallow and deep frying food products, frying temperatures in the range of 120-200°C are employed.

Shea olein is known to have a good stability versus oxidation. Although the SAFA content of shea olein is also around 35-40 %, the saturated fatty acids are mainly stearic acids which are quite neutral towards cholesterol. One of the disadvantages of this product is that crude shea olein contains high amounts of free fatty acids (FFA) commonly between 5 and 20 wt % and high amounts of diglycerides linked to said FFA. As a consequence shea olein needs to be refined at high deodorising temperatures (e.g. above 250 °C) and it also needs a quite long residence time in the deodoriser. There is a growing concern in the food industry that oils that have been treated at high temperatures during long times, may contain higher amounts of chloro-propanol components, which are thought to have toxic effects. Moreover, diglycerides are considered as precursors in the formation process of unwanted chloro-propanol components, especially in the presence of chlorine atoms. The latter may be naturally present in the oil, or they may come from materials that were in contact with the oil during its processing. One of these materials is for instance bleaching earth that has been activated with hydrochloric acid. For this reason physically activated bleaching earth is to be preferred instead when it comes to avoiding the formation of these undesired substances. A suitable example of such bleaching earth is a physically activated attapulgite clay with a high surface area (e.g. 250-300 m²/g ) and a neutral pH, obtained trough a process comprising an exfoliation and a heating step.

During the frying process, the shea olein based oil is again subjected to high temperatures. Thus, when high diglyceride contents are present in the oil, there is again a risk of formation of unwanted chloro-propanol components, since the food being fried may contain chlorine atoms.

Yet another oil that can be used for frying is for example sal olein as notably described in JP 2001-269116. JP 2001-269116 describes a fat composition comprising 50% of a soft fractionated sal fat having a iodine value (IV) ranging from 50-65, preferably from 57-62, in particular an IV of 58, i.e. a sal olein, and 50% of rapeseed oil and its use as a frying oil. For example, it is demonstrated that French fries can be prepared by deep frying frozen French fries at 180°C in said frying oil. Sal oleine is described as having a good thermal stability. Oleins are cheap by-products from fractionation processes intended to make hard fractions, e.g. for application in cocoa butter equivalents. They are available in large quantities and to find application areas for these products is quite a big challenge. Also in the sal fractionation process, diglycerides concentrate to the olein fraction. This may have unwanted side effects as explained above for the shea olein.

Despite the efforts that have been directed to the development of fat compositions suitable for use in frying applications, in particular in the preparation of fried food products as mentioned above, it still remains a challenge to reconcile their technical and nutritional requirements.

Therefore, there is a continuous need to provide deep fried food products having optimal nutritional properties, in terms of the SAFA-level and the types of SAFA present therein, preferably containing limited levels of diglycerides, combined with having optimal technical requirements, in particular having a low risk of a wet or oily surface of the fried product providing crispiness and a dry appearance, having less tendency to a waxy mouthfeel and wherein said deep fried food products have an improved ability to be covered with an coating whereby said coated deep fried products obtained have a low risk of migration of liquid substances through the coating to the surface of said coated deep fried products.

### Summary of the invention

The inventors have now surprisingly found that it is possible to provide deep fried food products fulfilling the above mentioned needs.

It is thus an object of the present invention to provide a process for the manufacturing of a deep fried food product (DFP), comprising subjecting an edible substrate [substrate (E), herein after] to a deep frying process at a temperature of at least 130°C, preferably at least 160°C, more preferably at least 170°C in a frying oil or fat wherein the glyceride composition [composition (G_{F}), herein after] of said frying oil or fat comprises with respect to the total weight of the composition (G_{F}):
a) from 10 to 40 wt % of saturated fatty acid residues having from 4 to 24 carbon atoms (SAFA),
b) less than 10 wt % of trans unsaturated fatty acid residues (TFA),
c) C16:0 and C18:0 fatty acid residues in a weight ratio of C18:0/C16:0 of at least 0.7,
d) from 35 to 75 wt % of UUU-triglycerides [U3, herein after],
e) S2U-triglycerides [S2U, herein after] and SSS-triglycerides [S3, herein after] wherein the sum of the amounts of S2U and S3 is from 6 to 50 wt %, and wherein the weight ratio of S2U/S3 is greater than 1, and
f) from 8 to 28 wt % of SU2-triglycerides [SU2, herein after],
wherein U represents an unsaturated fatty acid residue having from 16 to 20 carbon atoms and S represents a saturated fatty acid residue having from 16 to 20 carbon atoms.

It is also an object of the present invention to provide the use of a glyceride composition (G_{F}) as a frying oil or fat in the process for the manufacturing of a deep fried product (DFP), wherein said glyceride composition (G_{F} ) comprises with respect to the total weight of the glyceride composition (G_{F}):
a) from 10 to 40 wt % of saturated fatty acid residues having from 4 to 24 carbon atoms (SAFA), preferably from 15 to 35 wt %, preferably from 17 to 32 wt %, preferably from 17 to 25 wt %,
b) less than 10 wt % of trans unsaturated fatty acid residues (TFA), preferably less than 5 wt %, more preferably less than 2 wt %,
c) C16:0 and C18:0 fatty acid residues in a weight ratio of C18:0/C16:0 of at least 0.7, preferably at least 1.0, more preferably at least 1.5, most preferably at least 2,
d) from 35 to 75 wt % of UUU-triglycerides (U3), preferably from 40 to 70 wt % of U3, preferably from 45 to 65 wt % of U3, preferably from 45 to 63 wt % of U3,
e) S2U-triglycerides (S2U) and SSS-triglycerides (S3) wherein the sum of the amounts of S2U and S3 is from 6 to 50 wt %, preferably from 8 to 40 wt %, preferably from 8 to 35 wt %, preferably from 15 to 35 wt %, and wherein the weight ratio of S2U/S3 is greater than 1, and
f) from 8 to 28 wt % of SU2-triglycerides (SU2), preferably 10 to 25 wt %, more preferably 12 to 20 wt %, and
wherein U represents an unsaturated fatty acid residue having from 16 to 20 carbon atoms and S represents a saturated fatty acid residue having from 16 to 20 carbon atoms, and wherein said glyceride composition (G_{F}) is preferably substantially free of hydrogenated fat component.

Further preferred embodiments of the present invention are defined in the appended claims.

### Detailed description of the invention

### The deep fried food product (DFP)

For the purpose of the present invention, the expression "deep fried food product (DFP)" is intended to denote any edible product that is obtained by subjecting an edible substrate [substrate (E), herein after] to a deep frying process at a temperature of at least 130°C, preferably at least 160 °C, more preferably at least 170 °C in the frying oil or fat, as mentioned above.

In the context of the present invention, it is understood that the the substrate (E), after being subjected to the deep frying process, as detailed above, has absorbed at least part of the frying oil or fat, as mentioned above.

According to a preferred embodiment of the present disclosure, the weight percent of the frying oil or fat comprised in the deep fried product (DFP), is generally from 2 to 45 wt %, preferably from 2 to 40 wt %, more preferably from 3 to 35 wt %, even more preferably from 4 to 30 wt %, based on the total weight of the deep fried product (DFP).

According to an advantageous embodiment of the present disclosure, the composition (G_{F}) of the frying oil or fat comprised in the deep fried product (DFP) comprises diglycerides in an amount of less than 20 wt %, preferably less than 15 wt%, more preferably less than 10 wt%, even more preferably less than 5 wt%, relative to the total weight of the glyceride composition (G_{F}).

The moderate to low levels of SAFA, being from 10 to 40 wt %, and the low levels of TFA, being at most 10 wt %, in the composition (G_{F}) of the frying oil or fat provides a healthy nutritional profile to the deep fried product (DFP) of the present disclosure.

According to a preferred embodiment, the SAFA content in the composition (G_{F}) of the frying oil or fat comprised in the deep fried product (DFP) of the present disclosure is in the range from 15 to 35 wt %, preferably in the range from 17 to 32 wt %, preferably in the range from 17 to 25 wt %, relative to the total weight of the composition (G_{F}).

The weight ratio of C18:0/C16:0 fatty acid residues in the composition (G_{F}) of the frying oil or fat is preferably at least 1.0, more preferably at least 1.5, even more preferably at least 2.0. A higher incorporation level of C18:0 fatty acid residues than C16:0 fatty acid residues in the deep fried product (DFP) of the present disclosure, provides deep fried products having improved effects on the bad LDL-cholesterol. Without wishing to be bound by theory, it is believed that the C18 fatty acid residues have a cholesterol neutral effect, while C16 fatty acid residues are known to be hypercholesterolemic.

According to a specific preferred embodiment, the SAFA comprises C18:0 fatty acid residues in an amount of at least 35 % by weight (% wt), preferably of at least 45 % wt, more preferably of at least 60 % wt, even more preferably of at least 70 % wt.

According to a preferred embodiment, the TFA content in the composition (G_{F}) of the frying oil or fat comprised in the deep fried product (DFP) of the present disclosure is less than 5 wt %, more preferably less than 2 wt %, relative to the total weight of the composition (G_{F}).

According to certain preferred embodiments of the present disclosure, the composition (G_{F}) of the frying oil or fat comprised in the deep fried product (DFP) is further characterized by at least one of the following features:
d) from 40 to 70 wt % of U3, preferably from 45 to 65 wt % of U3, preferably from 45 to 63 wt % of U3
e) the sum of the amounts of S2U and S3 is from 8 to 40 wt %, preferably from 8 to 35 wt %, preferably from 15 to 35 wt %, and wherein the weight ratio of S2U/S3 is greater than 1, and
f) from 10 to 25 wt % of SU2, preferably from 12 to 20 wt % of SU2, wherein all wt % are based on the total weight of the composition (G_{F}).

The Inventors have surprisingly found that the composition (G_{F}) of the frying oil or fat, as detailed above, provides deep fried product (DFP) being endowed with improved nutritional properties and having a reduced tendency to oil out, as demonstrated in detail in the working examples

It is understood that the term "SU2-triglycerides (SU2)" covers SUU-triglycerides [SUU, herein after] and USU-triglycerides [USU, herein after].

It is understood that the term "S2U-triglycerides (S2U)" covers SSU-triglycerides [SSU, herein after] and SUS- triglycerides [SUS, herein after].

According to certain preferred embodiments of the present invention, the weight ratio of SSU/SUS in the composition (G_{F}) is at least 1, preferably at least 1.5. The SUS-triglycerides may show a higher risk for recrystallization than SSU types.

As said, U represents an unsaturated fatty acid residue having from 16 to 20 carbon atoms. Preferably, U represents an unsaturated fatty acid residue having 18 carbon atoms selected from C18:1, C18:2, C18:3, respectively having one, two or three carbon-carbon double bonds, and mixtures thereof.

According to a preferred embodiment of the present disclosure, the composition (G_{F}) of the frying oil or fat comprised in the deep fried product (DFP) preferably comprises C18:1 residues in an amount of at least 75 wt %, more preferably of at least 80 wt %, most preferably of at least 85 wt %, based on the total weight of unsaturated fatty acid residue.

Preferably, the composition (G_{F}) of the frying oil or fat comprised in the deep fried product (DFP) according to the disclosure, comprises the saturated and unsaturated fatty acid residue having 18 carbon atoms selected from C18:1, C18:2, C18:3, and mixtures thereof, in an amount of at least 65 wt %, preferably of at least 70 wt %, more preferably of at least 75 wt %, relative to the total weight of the composition (G_{F}).

It is further preferred that the composition (G_{F}) of the frying oil or fat comprised in the deep fried product (DFP) according to the present disclosure comprises at least one hard or semi hard fat component having a slip melting point of at least 25°C and at least one liquid oil component having a slip melting point of no more than 25°C.

For the purpose of the present invention, the expression "at least one hard or semi hard fat component having a slip melting point of at least 25°C" is understood to refer to at least one hard or semi-hard fat having a slip melting point of at least 25°C or to a mixture of two or more hard or semi-hard fats having a slip melting point of at least 25°C.

For the purpose of the present invention, the expression "at least one liquid oil component having a slip melting point of no more than 25°C" is understood to refer to at least one liquid oil having a slip melting point of no more than 25°C or to a mixture of two or more liquid oils having a slip melting point of no more than 25°C.

It is understood that a hard fat is a fat that at room temperature has a uniform hard structure, while a semi-hard fat contains at room temperature at least a substantial amount of visible solid fat.

Preferably, in the composition (G_{F}), the amount of the liquid oil component is present in the range from 40 to 90 wt %, preferably from 50 to 90 wt %, more preferably from 60 to 85 wt % and the amount of the hard or semi-hard fat component is present in the range from 10 to 60 wt %, preferably from 10 to 50 wt %, more preferably from 15 to 40 wt %, all ranges with respect to the weight of the composition (G_{F}).

The liquid oil chosen as the liquid oil component or as part of the liquid oil component is preferably a vegetable oil selected from the group of rapeseed oil, high oleic rapeseed oil, corn oil, soy oil, sunflower seed oil, high oleic sunflower seed oil, cotton seed oil, maize oil, olive oil, hazelnut oil, groundnut oil, high oleic palm oil, liquid fractions of palm oil or shea butter, a blend of two or more of these liquid oils and/or fractions thereof.

The hard or semi-hard fat chosen as the hard or semi-hard fat component or as part of the hard or semi-hard fat component is preferably a vegetable fat selected from the group of cocoa butter, shea butter, illipe butter, kokum fat, sal fat, allanblackia fat, mango kernel fat, an enzymatically prepared fat containing at least 35 wt % S2U-triglycerides, or a fraction thereof, or a blend of two or more of the afore mentioned fats or fractions thereof. These fats contain S2U and S3 triglycerides. The amount of S3 triglycerides, having a high melting point and tending to create a waxy mouthfeel, is limited in these fats.

According to certain embodiments of the present invention, the at least one of the hard or semi hard fat component having a slip melting point of at least 25°C may comprise at least one hard or semi-hard fat component that is obtained by fractionation or interesterification, alternatively by a combination of fractionation followed by interesterification, or by interesterification followed by fractionation. It is understood in the context of this invention that said fractionation process, prior or after the interesterification process, is preferred over a hydrogenation process. The interesterification process may be a chemical interesterification or enzymatic interesterification process. The enzymatic interesterification can be either random or specific. By the term "specific" it is meant to be a specificity towards the position of the fatty acid residues on the glycerol backbone.

According to certain embodiments of the present disclosure, the composition (G_{F}) of the frying oil or fat comprised in the deep fried product (DFP) may also comprise at least one lauric oil.

Among lauric oils mention may notably be made of coconut oil, palm kernel oil, babassu oil, blends of two or more of these oils, and fractions, in particular an olein or stearine fraction, thereof.

Advantageously, the amount of lauric oils in the composition (G_{F}) is limited because lauric oils contain rather high amounts of saturated fatty acids, however the majority having a moderate hypercholesterolemic effect (e.g. C12 fatty acid residue).

The composition (G_{F}) of the frying oil or fat comprised in the deep fried product (DFP) preferably comprises lauric oils in an amount of at most 20 wt %, more preferably from 1 to 20 wt %, more preferably from 4 to 15 wt %, most preferably from 3 to 10 wt %, relative to the total weight of the composition (G_{F}).

The at least one lauric oil may be comprised in the at least one hard or semi hard fat component having a slip melting point of at least 25°C, as mentioned above. The at least one lauric oil may be combined with a hard or semi hard fat thereby forming a blend, followed by interesterification of said blend. The at least one lauric oil may also be combined with a hard fat or semi hard fat and a liquid oil component followed by interesterification of said blend. The obtained interesterified fat is then incorporated into the at least one hard or semi hard fat component having a slip melting point of at least 25°C.

In an embodiment of the present disclosure, the composition (G_{F}) of the frying oil or fat comprised in the deep fried product (DFP) is preferably substantially free of oil or fat components being derived from genetically modified sources and is also preferably substantially free of hydrogenated oil or fat components. In general, the consumers prefer food products that have not been subjected to these kind of modifications.

The term "hydrogenated oil or fat components" refers to oil or fat components that have been subjected to a hydrogenation process.

For the purpose of the present invention, the expression "substantially free of oil or fat components being derived from genetically modified sources" means that the content of oil or fat components being derived from genetically modified sources, relative to the total weight of the composition (G_{F}), is less than 0.9 wt %.

For the purpose of the present invention, the expression "substantially free of hydrogenated oil or fat components" means that the content of hydrogenated oil or fat components, relative to the total weight of the composition (G_{F}), is less than 2.5 wt %, in particular less than 2.0 wt %.

The frying oil or fat comprised in the deep fried product (DFP) may further optionally comprise at least one additive such as antioxidants, vitamins, minerals, anti-foaming agents, color agents, flavouring agents, anti-spattering agents, aromas and the like.

Among antioxidants mention may be notably made of natural or synthetic tocopherols, tocotrienols, ascorbyl palmitate, extracts from rosemary, sage, oregano or summer savory, TBHQ, BHA, BHT, EDTA, propyl gallate, dodecyl gallate, citric acid, tartaric acid and carotenes.

Among anti-foaming agents mention may be notably made of agents containing silicone oil.

The fried product (DFP) of the present disclosure further comprises water and dry matter.

In general, the dry matter comprised in the deep fried product (DFP) of the present disclosure may include proteins and/or saccharides.

It is typically known that during a deep frying process, chemical reactions may occur, such as caramelization and / or Maillard reaction, both responsible for the development of gold to brown color on the surface of the deep fried product.

In general, the surface of the deep fried product (DFP) of the present disclosure advantageously has a color between a golden yellow to a brown color.

It is further understood that the water content of the deep fried product (DFP) of the present disclosure depends on the nature of the substrate (E) as mentioned above, and the degree of dehydration of the substrate (E) during the deep frying process.

The deep fried product (DFP) according to the present disclosure may be selected among a fried dough product, a fried cereal product, a fried meat product, a fried vegetable product, a fried potato product, a fried seafood or fish product, a fried fruit product.

Accordingly, the substrate (E) may be selected among a dough product such as for example an uncooked donut mixture, a cereal product, a meat product, a vegetable product, a potato product, a seafood or fish product, a fruit product.

Non-limiting examples of fried dough products may include notably donuts, beignets, and the like.

The term "donut" is well known in the art.

Non-limiting examples of fried cereal products may notably include donuts, churros, Berliners, krupuk, etc.

Non-limiting examples of fried meat products may notably include fried chicken, meat balls, chicken nuggets, croquettes filled with meat, etc.

Non-limiting examples of fried vegetable products may notably include falafel, tortilla chips, onion rings, vegetable burgers, chips based on sweet potato, carrot, parsnip, beet root, etc.

Non-limiting examples of fried potato products may notably include French fries, potato chips, potato wedges, pommes duchesses, pommes dauphine, rösti, croquettes, etc.

Non-limiting examples of fried seafood or fish products may notably include calamares, prawn crackers, takoyaki, fish sticks, croquettes filled with a fish based filling, etc.

Non-limiting examples of fried fruit products may notably include beignets with a fruit filling, chips based on fruit such as bananas, apple, mango, pineapple, etc.

Non-limiting examples of other fried food products may notably include mozzarella sticks, deep fried tofu, croquettes filled with cheese, etc.

Preferred fried products (DFP) include donuts.

The deep fried product (DFP) of the present disclosure may be further used in the production of finished fried products. Typically, the deep fried product (DFP) can be further coated, filled and/or topped according to known practice in the art, and depending on the desired end use.

Said finished fried products are also object of the present disclosure.

According to a preferred embodiment of the present disclosure, the deep fried product (DFP) is coated with a coating and/or filled with a filler.

The coating advantageously comprises at least one component selected from the group consisting of sugar, fat, milk ingredients, cocoa powder, coffee powder, sugar replacers, sweeteners, natural and synthetic colorants.

Among milk ingredients mention may be made of full or skimmed milk powder, whey powder or lactose.

Among sugar replacers mention may be made of (1) non-nutritive sweeteners such as notably steviol glycosides, thaumatine, luon han guo extract, brazzeïne, monatin, neohespiridine, neotame, saccharin, sucralose, acesulfame K, aspartame, sugar alcohols and the like and (2) nutritive sweeteners such as notably all sugars commonly found in food such as glucose, fructose, galactose, sucrose, maltose, corn based sweeteners and low digestible carbohydrates e.g polydextrose, inulin, oligofructose, maltodextrin and the like.

The coating is preferably a sugar coating or a coating comprising one or more fats or a coating comprising one or more fats and sugar.

Non-limiting examples of fats suitable for use in said coating may comprise cocoa butter, cocoa butter equivalents (CBE), cocoa butter replacers (CBR), palm fractions, shea butter or fractions thereof, sal fat, enzymaticly prepared SOS-triglycerides, lauric fats and/or fractions thereof, interesterified lauric fats and/or fractions thereof, hydrogenated and interesterified lauric fats and/or fractions thereof, and blends of two or more of the afore mentioned fats and/or fractions thereof.

For example, the deep fried product (DFP) of the present disclosure can be coated, by applying on at least part of the fried product (DFP), a coating layer such as a chocolate or chocolate-like layer, a cream layer, and the like.

For example, the deep fried product (DFP) of the present disclosure can be filled with confectionery cream, a culinary filling, cheese and the like.

The deep fried product (DFP) of the present disclosure may be consumed hot, immediately after deep frying, or cold at room temperature.

The deep fried product (DFP) of the present disclosure may be stored and/or distributed for sale and/or consumed.

If desired, the deep fried product (DFP) of the present disclosure may be packaged prior to storage and/or prior to be distributed for sale and/or prior to consumption.

At the point of the sale, deep fried product (DFP) may either be fully baked, or be partially baked, or be in a frozen pre-fried condition requiring further preparation by oven or microwave or a further deep frying step.

The deep fried product (DFP) of the present disclosure may be stored below room temperature, for example between 0 and 10 °C, or in the freezer.

In a specific preferred embodiment of the present disclosure, the deep fried product (DFP) is a donut or a donut-like product, wherein said donut or donut-like product may optionally be filled or coated after deep frying.

For the purpose of the present disclosure, the expression "donut-like product" is intended to denote any edible product that do not have the usual circular donut shape, but which are made in a similar way, based on a donut mix or based on a blend similar to a donut mix, in particular a blend of flour, water and optional ingredients such as sugar, yeast, milk, condensed milk, milk powder, butter, margarine, shortening, eggs, egg yolk, salt, baking powder, flavours, vanilla sugar, fresh or dried fruit like raisins, apple, cherries, banana or the like.

The donut may be coated and/or filled so as to obtain a coated donut, a donut with a filling or a donut with a filling and a coating.

### The manufacturing of the deep fried product (DFP)

A first aspect of the present invention is a process for the manufacturing of the deep fried product (DFP), as detailed above, comprising subjecting the edible substrate [substrate (E)], as detailed above, to a deep frying process at a temperature of at least 130°C, preferably at least 160 °C, more preferably at least 170 °C in a frying oil or fat wherein the glyceride composition [composition (G_{F}), herein after] of said frying oil or fat comprises with respect to the total weight of the composition(G_{F}):
a) from 10 to 40 wt % of saturated fatty acid residues having from 4 to 24 carbon atoms (SAFA),
b) less than 10 wt % of trans unsaturated fatty acid residues (TFA),
c) C16:0 and C18:0 fatty acid residues in a weight ratio of C18:0/C16:0 of at least 0.7,
d) from 35 to 75 wt % of UUU-triglycerides [U3, herein after],
e) S2U-triglycerides [S2U, herein after] and SSS-triglycerides [S3, herein after] wherein the sum of the amounts of S2U and S3 is from 6 to 50 wt %, and wherein the weight ratio of S2U/S3 is greater than 1, and
f) from 8 to 28 wt % of SU2-triglycerides [SU2, herein after],
wherein U represents an unsaturated fatty acid residue having from 16 to 20 carbon atoms and S represents a saturated fatty acid residue having from 16 to 20 carbon atoms.

It is further understood that all definitions and preferences as described above equally apply for this embodiment and all further embodiments, as described below.

Good results were obtained when the deep frying process was carried out at a temperature ranging from 150 °C to 210 °C, preferably from 160 to 200 °C; more preferably from 160 to 190 °C.

The process for the manufacturing of the deep fried product (DFP) of the present invention may further comprise cooling of the deep fried product (DFP) to a temperature below 40 °C, preferably below 35 °C.

Deep frying processing techniques are well known in the art. In deep frying processes, the food product, i.e. the substrate (E), is fully or partially submerged in a bed of a frying oil or fat. Both, batch and continuous fryers can be used for this purpose.

Shallow frying processes which are processes for frying a food product in a thin layer of oil for instance in a pan or a griddle, are not to be considered within the scope of this invention. In shallow frying application, typically use is made of margarine. Margarines are emulsified products, containing considerable amounts of water and they clearly differ from frying oils and fats used for deep frying. Moreover, in shallow frying the fat is not re-used, while this is common practice for deep frying.

### Frying oil or fat

A second aspect of the present invention is the use of a glyceride composition (GF) as a frying oil or fat in the process for the manufacturing of the deep fried product (DFP), as detailed above, wherein said glyceride composition (GF) comprises with respect to the total weight of the glyceride composition (GF):
a) from 10 to 40 wt % of saturated fatty acid residues having from 4 to 24 carbon atoms (SAFA), preferably from 15 to 35 wt %, preferably from 17 to 32 wt %, preferably from 17 to 25 wt %,
b) less than10 wt % of trans unsaturated fatty acid residues (TFA), preferably less than 5 wt %, more preferably less than 2 wt %,
c) C16:0 and C18:0 fatty acid residues in a weight ratio of C18:0/C16:0 of at least 0.7, preferably at least 1.0, more preferably at least 1.5, most preferably at least 2,
d) from 35 to 75 wt % of UUU-triglycerides (U3), preferably from 40 to 70 wt % of U3, preferably from 45 to 65 wt % of U3, preferably from 45 to 63 wt % of U3,
e) S2U-triglycerides (S2U) and SSS-triglycerides (S3) wherein the sum of the amounts of S2U and S3 is from 6 to 50 wt%, preferably from 8 to 40 wt %, preferably from 8 to 35 wt %, preferably from 15 to 35 wt %, and wherein the weight ratio of S2U/S3 is greater than 1, and
f) from 8 to 28 wt % of SU2-triglycerides (SU2), preferably 10 to 25 wt %, more preferably 12 to 20 wt %, and
wherein U represents an unsaturated fatty acid residue having from 16 to 20 carbon atoms and S represents a saturated fatty acid residue having from 16 to 20 carbon atoms.

Preferably, the glyceride composition (G_{F}) is substantially free of hydrogenated fat components.

For the purpose of the present invention, the expression "substantially free of hydrogenated fat components" means that the content of hydrogenated fat components, relative to the total weight of the glyceride composition, is less than 2.5 wt.%, in particular less than 2.0.

Advantageously, the diglycerides content in said glyceride composition (G_{F}) is less than 20 wt %, preferably less than 15 wt %, more preferably less than 10 wt%, even more preferably less than 5 wt%, relative to the total weight of the glyceride composition (G_{F}).

Preferably, the lauric fats in said glyceride composition are limited.

According to an advantageous embodiment of the present disclosure, said glyceride composition (G_{F}) comprises C12:0 fatty acid residues in an amount of less than 10 wt %, preferably less than 7 wt %, more preferably less than 5 wt %, relative to the total weight of saturated fatty acid residues (SAFA) having from 4 to 24 carbon atoms.

According to a preferred embodiment of the present invention, said glyceride composition (G_{F}) is substantially free of oil or fat components being derived from genetically modified sources.

It is further understood that the frying oils and fats herein described can also be used in other food applications like for instance margarine and spreads, chocolate spreads, soft confectionery creams, and the like.

Another aspect of the present invention relates to the use of said said glyceride composition (G_{F}) for deep frying, wherein said deep frying is optionally followed by a coating step.

The present invention is further illustrated by the examples and comparative examples given below.

All blending ratios, contents and concentrations in this text are given in weight units and weight percent, unless stated otherwise.

### Example 1: preparation of frying oils or fats for use according to the invention

Sample 1: A frying oil or fat, for use according to the invention, was prepared by combining 79% of high oleic sunflower seed oil with 21% of shea stearine.

Sample 2: A frying oil or fat, for use according to the invention, was prepared by combining 70.5% of high oleic sunflower seed oil with 29.5% of shea stearine.

Sample 3: A frying oil or fat, for use according to the invention, was prepared by combining 62.5% of high oleic sunflower seed oil with 37.5% of shea stearine.

Sample 4: A frying oil or fat, for use according to the invention, was prepared by blending 82% of high oleic sunflower seed oil with 18% of a hardstock that was prepared by chemical interesterification of a blend of shea stearine with coconut oil. The coconut oil, being a lauric oil component, represented 4.5% on total fat composition.

Sample 5: A frying oil or fat, for use according to the invention, was prepared by blending 74% of high oleic sunflower seed oil with 26% of a hardstock that was prepared by chemical interesterification of a blend of shea stearine with coconut oil. The coconut oil, being a lauric oil component, represented 6.5% on total fat composition.

Sample 6: A frying oil or fat, for use according to the invention, was prepared by blending 64% of high oleic sunflower seed oil with 36% of a hardstock that was prepared by chemical interesterification of a blend of shea stearine with coconut oil. The coconut oil, being a lauric oil component, represented 9% on total fat composition.

The frying oils or fats of samples 1 to 6 were analysed and the fatty acid residue concentrations and the glyceride composition information of sample 1 to 6 are given in table 1.

**Table 1**

| | **Sample 1** | **Sample 2** | **Sample 3** | **Sample 4** | **Sample 5** | **Sample 6** |
|---|---|---|---|---|---|---|
| *Fatty acid residue concentrations (wt %)* | | | | | | |
| C8:0 | 0.0 | 0.0 | 0.0 | 0.4 | 0.5 | 0.8 |
| C10:0 | 0.0 | 0.0 | 0.0 | 0.3 | 0.4 | 0.5 |
| C12:0 | 0.0 | 0.0 | 0.2 | 2.4 | 3.2 | 4.8 |
| C14:0 | 0.1 | 0.1 | 0.1 | 0.9 | 1.3 | 1.9 |
| C16:0 | 3.7 | 4.4 | 4.8 | 4.0 | 4.1 | 4.6 |
| C16:1 | 0.1 | 0.1 | 0.0 | 0.1 | 0.1 | 0.0 |
| C17:0 | 0.0 | 0.0 | 0.0 | 0.0 | 0.1 | 0.0 |
| C18:0 | 14.3 | 18.8 | 23.2 | 9.8 | 12.8 | 16.9 |
| C18:1 | 71.8 | 68.0 | 63.6 | 71.9 | 67.6 | 62.1 |
| C18:2 | 8.0 | 6.7 | 6.3 | 8.3 | 7.8 | 6.7 |
| C18:3 | 0.5 | 0.1 | 0.1 | 0.5 | 0.0 | 0.1 |
| C20:0 | 0.5 | 0.7 | 0.0 | 0.5 | 0.5 | 0.0 |
| C20:1 | 0.3 | 0.2 | 0.2 | 0.3 | 0.3 | 0.2 |
| C22:0 | 0.7 | 0.6 | 0.6 | 0.6 | 0.6 | 0.5 |
| C22:1 | 0.0 | 0.0 | 0.0 | 0.0 | 0.0 | 0.0 |
| C24:0 | 0.0 | 0.0 | 0.2 | 0.0 | 0.2 | 0.2 |
| SAFA | 19.3 | 24.5 | 29.0 | 18.8 | 23.8 | 30.2 |
| C18:0/C16:0 | 3.8 | 4.3 | 4.8 | 2.4 | 3.1 | 3.7 |
| TFA | 0.0 | 0.0 | 0.9 | 0.0 | 0.2 | 0.6 |

| *Glycerides composition (wt %)* | | | | | | |
|---|---|---|---|---|---|---|
| U3 | 61 | 54 | 47 | 63 | 58 | 54 |
| S2U+S3 | 20 | 27 | 33 | 9 | 12 | 15 |
| S2U/S3 | 13 | 19 | 26 | 3 | 3 | 3 |
| SU2 | 14 | 14 | 13 | 13 | 13 | 12 |
| Others | 5 | 6 | 7 | 15 | 17 | 19 |

| | | | | | | |
|---|---|---|---|---|---|---|
| "U" represents an unsaturated fatty acid residue having from 16 to 20 carbon atoms "S" represents a saturated fatty acid residue having from 16 to 20 carbon atoms | | | | | | |

### Comparative Example 1: preparation of comparative frying oils or fats

Comparative Sample 1: A frying oil or fat consisting of 100% palm oil.

Comparative Sample 2: A frying oil or fat consisting of 100% double fractionated palm olein.

Comparative Sample 3: A frying oil or fat consisting of 100% High Oleic Sunflower oil.

The frying oils or fats of comparative samples 1 to 3 were analysed and the fatty acid residue concentrations and the glyceride composition information of comparative samples 1 to 3 are given in table 2.

**Table 2**

| | **Comparative Sample 1** | **Comparative Sample 2** | **Comparative Sample 3** |
|---|---|---|---|
| *Fatty acid residue concentrations (wt %)* | | | |
| C10:0 | 0.1 | 0.0 | 0.0 |
| C12:0 | 0.4 | 0.3 | 0.0 |
| C14:0 | 1.2 | 1.1 | 0.1 |
| C16:0 | 43.8 | 35.5 | 3.8 |
| C16:1 | 0.2 | 0.2 | 0.1 |
| C17:0 | 0.1 | 0.1 | 0.1 |
| C18:0 | 4.6 | 3.9 | 2.6 |
| C18:1 | 37.0 | 45.6 | 82.0 |
| C18:2 | 10.7 | 12.4 | 9.4 |
| C18:3 | 0.2 | 0.3 | 0.6 |
| C20:0 | 0.4 | 0.4 | 0.3 |
| C20:1 | 0.1 | 0.2 | 0.3 |
| C22:0 | 0.0 | 0.0 | 0.8 |
| C22:1 | 0.0 | 0.0 | 0.0 |
| C24:0 | 0.0 | 0.0 | 0.0 |
| SAFA | 50.5 | 41.2 | 7.7 |
| C18:0/C16:0 | 0.1 | 0.1 | 0.7 |
| TFA | 1.5 | 0.0 | 0.0 |

| *Glycerides composition (wt %)* | | | |
|---|---|---|---|
| U3 | 6 | 8 | 72 |
| S2U+S3 | 47 | 32 | 3 |
| S2U/S3 | 7 | 320 | 16 |
| SU2 | 35 | 46 | 17 |
| Others | 11 | 14 | 8 |

| | | | |
|---|---|---|---|
| "U" represents an unsaturated fatty acid residue having from 16 to 20 carbon atoms "S" represents a saturated fatty acid residue having from 16 to 20 carbon atoms | | | |

### Example 2: Manufacturing of a fried donut

Donuts were prepared by following the steps a) to c) thereby using the frying oils or fats of example 1 and comparative example 1:
a) An uncooked donut mixture such as the standard bakery shop donut mix from Kessko (ingredients: wheat flour, butter powder, whey powder, wheat gluten, skimmed curd powder, sugar, milk sugar, salt, baking powder, emulsifiers mono and diglycerides, flour improver ascorbic acid and enzyme; fat content 8.4%) was used for all the tests and the donuts were prepared according to the instructions.
b) The donut was rolled at 0,5 cm height and allowed to rest for 5 min before being shaped. After 35 min rising time at 38 °C, each donut was fried 1 min on each side when the temperature of the corresponding frying oil or fat reached 180°C.
c) Each donut was cooled on a grid at room temperature for 25 min.

Each donut was then transferred to a tray covered with a filter paper and stored for 1 day at 20°C. The amount of oil taken up by the filter paper (oil loss) was determined and expressed on the weight of the donuts. The oil loss was then normalized on 100 g fried donut weight. The results of these test are summarized in table 3 and table 4.

**Table 3**

| | **Comparative Sample 1** | **Comparative Sample 2** | **Comparative Sample 3** |
|---|---|---|---|
| SAFA (wt %) | 50.5 | 41.2 | 7.7 |
| Oil loss @20°C | 0.42 | 2.35 | 3.36 |

**Table 4**

| | **Sample 1** | **Sample 2** | **Sample 3** | **Sample 4** | **Sample 5** | **Sample 6** |
|---|---|---|---|---|---|---|
| SAFA (wt %) | 19.3 | 24.5 | 29.0 | 18.8 | 23.8 | 30.2 |
| Oil loss @20°C | 2.33 | 1.48 | 0.75 | 1.31 | 0.86 | 0.29 |

Palm oil (Comparative sample 1) gives a good performance: the surface of the donut is not oily and the loss upon storage on filter paper is quite limited. However, the disadvantage of palm oil is its high content of SAFA. Palm olein (Comparative sample 2) has a 9.3% lower SAFA-content than the palm oil. Its performance in the test is clearly worse: the surface is more oily and the loss on filter paper is clearly higher.

High oleic sunflower seed oil (Comparative sample 3) has a very healthy nutritional profile in terms of SAFA (~8%), but the donuts fried in this oil have a very oily surface and the % oil loss on the filter paper is high.

Samples 1 to 3 are frying oils or fats prepared by combining shea stearine with High oleic sunflower seed oil. Although sample 1 contains less than half of the SAFA of palm olein, it performs equally well as palm olein. When raising the SAFA content of this type of frying oil or fat to ~25% (sample 2), which is still very low compared to the traditional palm based frying oils, we clearly see a further potential improvement in terms of reducing the oiliness of the donuts.

Sample 4 to 6 are other type of frying oils or fats for use according to the invention. They contain an interesterified hard fat component and some lauric oil. The SAFA-content of the sample 4 is only 18.8 %. We can see that in the test it gives an excellent performance.

By increasing further the SAFA level to 30% (sample 6), the results became comparable and even slightly better than the one obtained with traditional palm oil, which has a 20% higher SAFA content.

### Comparative Example 3: Manufacturing of a fried donut

Donuts were prepared according to the procedure as described above in example 2 by using a frying oil composition as described in example 2 of EP 0 797 921.

Accordingly, a blend of double fractionated (DF) palm olein : rapeseed oil in a ratio of 3:1 was prepared and interesterified in order to achieve the ratio PPO/ POP of 2. The characteristics of this blend are given in the table 5 below and are very comparable to those described in table 3 of EP 0 797 921. Then the donuts were prepared and fried in said fat blend and an oil loss was measured at 20°C. A result of 0.93% was obtained, as summarized in table 5 below.

**Table 5**

| | **Reproduced example 2 of** EP 0 797 921 - 3:1 **DF palm olein : rapeseed oil** | **Sample 6 of example 1 of the present invention** |
|---|---|---|
| *Fatty acid residue concentrations (wt %)* | | |
| C8:0 | 0.0 | 0.8 |
| C10:0 | 0.0 | 0.5 |
| C12:0 | 0.3 | 4.8 |
| C14:0 | 0.9 | 1.9 |
| C16:0 | 28.6 | 4.6 |
| C16:1 | 0.2 | 0.0 |
| C17:0 | 0.1 | 0.0 |
| C18:0 | 3.3 | 16.9 |
| C18:1 | 48.1 | 62.1 |
| C18:2 | 14.8 | 6.7 |
| C18:3 | 2.4 | 0.1 |
| C20:0 | 0.4 | 0.0 |
| C20:1 | 0.4 | 0.2 |
| C22:0 | 0.1 | 0.5 |
| C22:1 | 0.1 | 0.0 |
| C24:0 | 0.1 | 0.2 |
| SAFA | 33.9 | 30.2 |
| C18:0/C16:0 | 0.12 | 3.7 |

| *Glycerides composition (wt %)* | | |
|---|---|---|
| U3 | 24 | 54 |
| S2U+S3 | 24 | 15 |
| S2U/S3 | 5 | 3 |
| SU2 | 38 | 12 |
| Others | 14 | 19 |

| *Performance* | | |
|---|---|---|
| Oil loss @20°C | 0.93 | 0.29 |

| | | |
|---|---|---|
| "U" represents an unsaturated fatty acid residue having from 16 to 20 carbon atoms "S" represents a saturated fatty acid residue having from 16 to 20 carbon atoms | | |

A comparison of the frying oil composition, as described in example 2 of EP 0 797 921 and reproduced thereof, with sample 6, as described above, shows that the performance of sample 6 in the frying test is 3 times better despite the fact that the SAFA content of sample 6 is even 3.7% lower. This being said, not only the performance but also the nutritional profile of sample 6 is much better.

In other words, there is a significant difference in the performance of the interesterified fats for use according to the present invention compared to the interesterified fats of EP 0 797 921. It is further understood that in critical applications like coating, sample 6 will also perform much better than example 2 of EP 0 797 921.

### Comparative Example 4: Manufacturing of a fried donut

A comparative frying oil or fat was prepared by combining 62.0% of shea olein with 38.0 % of rapeseed oil. The fatty acid residue concentrations and the glyceride composition information of this comparative frying oil or fat is given in table 6. This comparative frying oil or fat has a SAFA content which is comparable to the SAFA level of sample 5 of example 1, as described above (i.e. 24.5% see table 1 above and reproduced in table 6). As demonstrated in table 6 below, sample 5 of example 1 has a rather limited content of SU2 of 13 wt %, while this comparative frying oil or fat of comparative example 4 has a high content of SU2 of 39% wt %.

Then donuts were prepared according to the procedure as described above in example 2 by using said comparative frying oil or fat of comparative example 4. The oil loss was measured at 20°C. A result of 1.92% was obtained, as summarized in table 6 below. This is significantly higher than the oil loss at 20 °C as obtained for sample 5 of example 1 (i.e. 0.86%).

**Table 6**

| | **Comparative example 4 - 62 % shea olein / 38 % rapeseed oil** | **Sample 5 of example 1 of the present invention** |
|---|---|---|
| *Fatty acid residue concentrations (wt %)* | | |
| C8:0 | 0.0 | 0.5 |
| C10:0 | 0.0 | 0.4 |
| C12:0 | 0.1 | 3.2 |
| C14:0 | 0.1 | 1.3 |
| C16:0 | 5.1 | 4.1 |
| C16:1 | 0.1 | 0.1 |
| C17:0 | 0.1 | 0.1 |
| C18:0 | 17.8 | 12.8 |
| C18:1 | 57.9 | 67.6 |
| C18:2 | 12.8 | 7.8 |
| C18:3 | 3.8 | 0.0 |
| C20:0 | 0.9 | 0.5 |
| C20:1 | 0.8 | 0.3 |
| C22:0 | 0.2 | 0.6 |
| C22:1 | 0.1 | 0.0 |
| C24:0 | 0.1 | 0.2 |
| SAFA | 24.3 | 23.8 |
| C18:0/C16:0 | 3.5 | 3.1 |

| *Glvcerides composition (wt %)* | | |
|---|---|---|
| U3 | 40 | 58 |
| S2U+S3 | 8 | 12 |
| S2U/S3 | 30 | 3 |
| SU2 | 39 | 13 |
| Others | 14 | 17 |

| *Performance* | | |
|---|---|---|
| Oil loss @20°C | 1.92 | 0.86 |

| | | |
|---|---|---|
| "U" represents an unsaturated fatty acid residue having from 16 to 20 carbon atoms "S" represents a saturated fatty acid residue having from 16 to 20 carbon atoms | | |

### Comparative Example 5: Manufacturing of a fried donut

Donuts were prepared according to the procedure as described above in example 2 by using a frying oil composition as described in example 1 of JP 2001-269116.

Accordingly, a blend of a commercially available sal oleine sample, as obtained from 3F Industries Ltd. in Tadepalligudem, India and rapeseed oil in a ratio of 1:1 was prepared. The fatty acid residue concentrations and the glyceride composition information of this comparative frying oil or fat is given in table 7. This comparative frying oil or fat of sal oleine - rapeseed oil (1:1) has a SAFA content of 24 % which is comparable to the SAFA level of sample 5 of example 1, as described above (see table 1 above and reproduced in table 7). As demonstrated in table 7 below, sample 5 of example 1 has a rather limited content of SU2 of 13 wt % respectively, while this comparative frying oil or fat of comparative example 5 has a high content of SU2 of 32% wt %.

Then donuts were prepared according to the procedure as described above in example 2 by using said comparative frying oil or fat of comparative example 5. The oil loss was measured at 20°C. A result of 1.51 % was obtained, as summarized in table 7 below. This is also higher than the oil loss at 20 °C as obtained for sample 5 of example 1 (i.e. 0.86%).

**Table 7**

| | **Comparative example 5 - 50 % sal olein / 50 % rapeseed oil (reproduced example 1 of** JP 2001-269116 | **Sample 5 of example 1 of the present invention** |
|---|---|---|
| *Fatty acid residue concentrations (wt %)* | | |
| C8:0 | 0.0 | 0.5 |
| C10:0 | 0.0 | 0.4 |
| C12:0 | 0.0 | 3.2 |
| C14:0 | 0.1 | 1.3 |
| C16:0 | 5.8 | 4.1 |
| C16:1 | 0.1 | 0.1 |
| C17:0 | 0.0 | 0.1 |
| C18:0 | 15.5 | 12.8 |
| C18:1 | 57.3 | 67.6 |
| C18:2 | 11.6 | 7.8 |
| C18:3 | 5.2 | 0.0 |
| C20:0 | 2.5 | 0.5 |
| C20:1 | 1.0 | 0.3 |
| C22:0 | 0.0 | 0.6 |
| C22:1 | 0.1 | 0.0 |
| C24:0 | 0.1 | 0.2 |
| SAFA | 24.0 | 23.8 |
| C18:0/C16:0 | 2.7 | 3.1 |

| *Glycerides composition (wt %)* | | |
|---|---|---|
| U3 | 42 | 58 |
| S2U+S3 | 14 | 12 |
| S2U/S3 | 23 | 3 |
| SU2 | 32 | 13 |
| Others | 12 | 17 |

| *Performance* | | |
|---|---|---|
| Oil loss @20°C | 1.51 | 0.86 |

| | | |
|---|---|---|
| "U" represents an unsaturated fatty acid residue having from 16 to 20 carbon atoms "S" represents a saturated fatty acid residue having from 16 to 20 carbon atoms | | |

## Claims

1. A process for the manufacturing of a deep fried food product (DFP), comprising subjecting an edible substrate [substrate (E), herein after] to a deep frying process at a temperature of at least 130 °C, preferably at least 160 °C, more preferably at least 170 °C in a frying oil or fat wherein the glyceride composition [composition (G_{F}), herein after] of said frying oil or fat comprises with respect to the total weight of the composition(G_{F}):
a) from 10 to 40 wt % of saturated fatty acid residues having from 4 to 24 carbon atoms (SAFA)
b) less than 10 wt % of trans unsaturated fatty acid residues (TFA),
c) C16:0 and C18:0 fatty acid residues in a weight ratio of C18:0/C16:0 of at least 0.7,
d) from 35 to 75 wt % of UUU-triglycerides [U3, herein after],
e) S2U-triglycerides [S2U, herein after] and SSS-triglycerides [S3, herein after] wherein the sum of the amounts of S2U and S3 is from 6 to 50 wt %, and wherein the weight ratio of S2U/S3 is greater than 1, and
f) from 8 to 28 wt % of SU2-triglycerides [SU2, herein after],
wherein U represents an unsaturated fatty acid residue having from 16 to 20 carbon atoms and S represents a saturated fatty acid residue having from 16 to 20 carbon atoms.

2. The process according to claim 1, wherein the composition (G_{F}) of the frying oil or fat is further **characterized by** at least one of the following features:
d) from 40 to 70 wt % of U3, preferably from 45 to 65 wt % of U3, preferably from 45 to 63 wt % of U3
e) the sum of the amounts of S2U and S3 is from 8 to 40 wt %, preferably from 8 to 35 wt %, preferably from 15 to 35 wt %, and wherein the weight ratio of S2U/S3 is greater than 1, and
f) from 10 to 25 wt % of SU2, preferably from 12 to 20 wt % of SU2, wherein all wt % are based on the total weight of the composition (G_{F}).

3. The process according to claim 1 or claim 2, wherein the composition (G_{F}) comprises SSU- and SUS-triglycerides in a weight ratio SSU/SUS of at least 1, preferably at least 1.5.

4. The process according to any one of claims 1 to 3, wherein the composition (G_{F}) comprises C18:1 residues in an amount of at least 75 wt %, more preferably of at least 80 wt %, most preferably of at least 85 wt %, based on the total weight of unsaturated fatty acid residue.

5. The process according to any one of claims 1 to 4, wherein the composition (G_{F}) comprises saturated and unsaturated fatty acid residue having 18 carbon atoms selected from C18:0, C18:1, C18:2, C18:3 and mixtures thereof, in an amount of at least 65 wt %, preferably of at least 70 wt %, more preferably of at least 75 wt %, relative to the total weight of the composition (G_{F}).

6. The process according to any one of claims 1 to 5, wherein the composition (G_{F}) comprises at least one hard or semi hard fat component having a slip melting point of at least 25°C and at least one liquid oil component having a slip melting point of no more than 25°C.

7. The process according to claim 6, wherein the amount of the liquid oil component is present in the range from 40 to 90 wt %, preferably from 50 to 90 wt %, more preferably from 60 to 85 wt % and the amount of the hard or semi-hard fat component is present in the range from 10 to 60 wt %, preferably from 10 to 50 wt %, more preferably from 15 to 40 wt %, all ranges with respect to the weight of the composition (G_{F}).

8. The process according to claim 6 or 7, wherein the at least one liquid oil component comprises at least one vegetable oil selected from the group of rapeseed oil, high oleic rapeseed oil, corn oil, soy oil, sunflower seed oil, high oleic sunflower seed oil, cotton seed oil, maize oil, olive oil, hazelnut oil, groundnut oil, high oleic palm oil, liquid fractions of palm oil or shea butter, a blend of two or more of these liquid oils and/or fractions thereof.

9. The process according to claim 6 or 7, wherein the at least one hard or semi hard fat component comprises a vegetable fat selected from the group of cocoa butter, shea butter, illipe butter, kokum fat, sal fat, allanblackia fat, mango kernel fat, an enzymatically prepared fat containing at least 35 wt % S2U-triglycerides, or a fraction thereof, or a blend of two or more of the afore mentioned fats or fractions thereof.

10. The process according to claim 6, 7 or 9, wherein at least one of the hard or semi hard fat components having a slip melting point of at least 25°C is obtained by fractionation or interesterification, alternatively by a combination of fractionation followed by interesterification, or by interesterification followed by fractionation.

11. The process according to claim 10, wherein the interesterification is a chemical or enzymatic interesterification.

12. The process according to any one of claims 1 to 11, wherein the composition (G_{F}) comprises at least one lauric oil in an amount of at most 20 wt %, more preferably from 1 to 20 wt %, even more preferably from 4 to 15 wt %, most preferably from 3 to 10 wt %, relative to the total weight of the composition (G_{F}).

13. The process according to claim 12, wherein the lauric oil is combined with a hard or semi hard fat thereby forming a blend, followed by interesterification of said blend.

14. The process according to any one of claims 1 to 13 wherein the composition (G_{F}) is substantially free of oil or fat components being derived from genetically modified sources, by having a content of said oil or fat components relative to the total weight of the composition (G_{F}) that is less than 0.9 wt %.

15. The process according to any one of claims 1 to 13 wherein the composition (G_{F}) is substantially free of hydrogenated oil or fat components, by having a content of said hydrogenated oil or fat components, relative to the total weight of the composition (G_{F}), that is less than 2.5 wt %, in particular less than 2.0 wt %.

16. The process according to any one of claims 1 to 15, wherein said deep fried product (DFP) is selected from a group consisting of a fried dough product, a fried cereal product, a fried meat product, a fried vegetable product, a fried potato product, a fried seafood or fish product, a fried fruit product.

17. The process according to claim 16, wherein the fried dough product is a donut or a donut-like product, wherein the donut-like product is any edible product that does not have the usual circular donut shape, but which is made in a similar way, based on a donut mix or based on a blend similar to a donut mix, in particular a blend of flour, water and optional ingredients such as sugar, yeast, milk, condensed milk, milk powder, butter, margarine, shortening, eggs, egg yolk, salt, baking powder, flavours, vanilla sugar, fresh or dried fruit like raisins, apple, cherries, banana.

18. The process according to any one of claims 1 to 17, wherein said process comprises subjecting the edible substrate to the deep frying process at a temperature ranging from 150°C to 210°C in the frying oil or fat, optionally followed by a cooling of the deep fried product (DFP) to a temperature below 40°C, preferably below 35°C.

19. Use of a glyceride composition (G_{F}) as a frying oil or fat in a process for the manufacturing of a deep fried product (DFP), wherein said glyceride composition (G_{F}) comprises with respect to the total weight of the glyceride composition (G_{F}):
a) from 10 to 40 wt % of saturated fatty acid residues having from 4 to 24 carbon atoms (SAFA), preferably from 15 to 35 wt %, preferably from 17 to 32 wt %, preferably from 17 to 25 wt %,
b) less than 10 wt % of trans unsaturated fatty acid residues (TFA), preferably less than 5 wt %, more preferably less than 2 wt %,
c) C16:0 and C18:0 fatty acid residues in a weight ratio of C18:0/C16:0 of at least 0.7, preferably at least 1.0, more preferably at least 1.5, most preferably at least 2,
d) from 35 to 75 wt % of UUU-triglycerides (U3), preferably from 40 to 70 wt % of U3, preferably from 45 to 65 wt % of U3, preferably from 45 to 63 wt % of U3,
e) S2U-triglycerides (S2U) and SSS-triglycerides (S3) wherein the sum of the amounts of S2U and S3 is from 6 to 50 wt %, preferably from 8 to 40 wt %, preferably from 8 to 35 wt %, preferably from 15 to 35 wt %, and wherein the weight ratio of S2U/S3 is greater than 1, and
f) from 8 to 28 wt % of SU2-triglycerides (SU2), preferably 10 to 25 wt %, more preferably 12 to 20 wt %, and
wherein U represents an unsaturated fatty acid residue having from 16 to 20 carbon atoms and S represents a saturated fatty acid residue having from 16 to 20 carbon atoms, and wherein said glyceride composition (G_{F}) is preferably substantially free of hydrogenated fat components, by having a content of said hydrogenated fat components, relative to the total weight of the composition (G_{F}), that is less than 2.5 wt %, in particular less than 2.0 wt %.

20. The use of claim 19, wherein said process is a deep frying process which is optionally followed by a coating step.

21. The use of claim 19 or claim 20, wherein said process is a deep frying process which is followed by coating, filling, and/or topping of the deep fried product (DFP).

## Patentansprüche

1. Ein Verfahren zur Herstellung eines frittierten Lebensmittelprodukts (FLP), welches das Aussetzen eines essbaren Substrats [nachstehend Substrat (E)] einem Frittierverfahren bei einer Temperatur von mindestens 130 °C, bevorzugt mindestens 160 °C, noch besser mindestens 170 °C in einem Frittieröl oder -fett umfasst, wobei die Glyceridzusammensetzung [nachstehend Zusammensetzung (G_{F})] des Frittieröls oder -fettes in Bezug auf das Gesamtgewicht der Zusammensetzung (G_{F}) Folgendes umfasst:
a) von 10 bis 40 Gew.-% gesättigte Fettsäurereste mit 4 bis 24 Kohlenstoffatomen (SAFA),
b) weniger als 10 Gew.-% trans-ungesättigte Fettsäurereste (TFA),
c) C16:0- und C18:0-Fettsäurereste in einem Gewichtsverhältnis C18:0/C16:0 von mindestens 0,7,
d) von 35 bis 75 Gew.-% UUU-Triglyceride [nachstehend U3],
e) S2U-Triglyceride [nachstehend S2U] und SSS-Triglyceride [nachstehend S3], wobei die Summe der Mengen von S2U und S3 von 6 bis 50 Gew.-% beträgt, und wobei das Gewichtsverhältnis S2U/S3 höher als 1 ist, und
f) von 8 bis 28 Gew.-% SU2-Triglyceride [nachstehend SU2],
wobei U für einen ungesättigten Fettsäurerest mit 16 bis 20 Kohlenstoffatomen steht und S für einen gesättigten Fettsäurerest mit 16 bis 20 Kohlenstoffatomen steht.

2. Das Verfahren nach Anspruch 1, wobei die Zusammensetzung (G_{F}) des Frittieröls oder -fettes ferner durch zumindest eines der folgenden Merkmale gekennzeichnet ist:
d) von 40 bis 70 Gew.-% U3, bevorzugt von 45 bis 65 Gew.-% U3, bevorzugt von 45 bis 63 Gew.-% U3
e) die Summe der Mengen von S2U und S3 beträgt von 8 bis 40 Gew.-%, bevorzugt von 8 bis 35 Gew.-%, bevorzugt von 15 bis 35 Gew.-%, und wobei das Gewichtsverhältnis S2U/S3 höher als 1 ist, und
f) von 10 bis 25 Gew.-% SU2, bevorzugt von 12 bis 20 Gew.-% SU2,
wobei sich alle Gew.-% auf das Gesamtgewicht der Zusammensetzung (G_{F}) beziehen.

3. Das Verfahren nach Anspruch 1 oder Anspruch 2, wobei die Zusammensetzung (G_{F}) SSU- und SUS-Triglyceride in einem Gewichtsverhältnis SSU/SUS von mindestens 1, bevorzugt mindestens 1,5 umfasst.

4. Das Verfahren nach irgendeinem der Ansprüche 1 bis 3, wobei die Zusammensetzung (G_{F}) C18:1-Reste in einer Menge von mindestens 75 Gew.-%, noch besser von mindestens 80 Gew.-%, am besten von mindestens 85 Gew.-%, basierend auf dem Gesamtgewicht von ungesättigtem Fettsäurerest, umfasst.

5. Das Verfahren nach irgendeinem der Ansprüche 1 bis 4, wobei die Zusammensetzung (G_{F}) gesättigte und ungesättigte Fettsäurereste mit 18 Kohlenstoffatomen ausgewählt aus C18:0, C18:1, C18:3 und Mischungen davon in einer Menge von mindestens 65 Gew.-%, bevorzugt von mindestens 70 Gew.-%, noch besser von mindestens 75 Gew.-%, in Bezug auf das Gesamtgewicht der Zusammensetzung (G_{F}), umfasst.

6. Das Verfahren nach irgendeinem der Ansprüche 1 bis 5, wobei die Zusammensetzung (G_{F}) zumindest eine Hart- oder Halbhartfettkomponente mit einem Steigschmelzpunkt von mindestens 25 °C und zumindest eine Flüssigölkomponente mit einem Steigschmelzpunkt von nicht mehr als 25 °C umfasst.

7. Das Verfahren nach Anspruch 6, wobei die Menge der Flüssigölkomponente im Bereich von 40 bis 90 Gew.-%, bevorzugt von 50 bis 90 Gew.-%, noch besser von 60 bis 85 Gew.-% vorhanden ist und die Menge der Hart- oder Halbhartfettkomponente im Bereich von 10 bis 60 Gew.-%, bevorzugt von 10 bis 50 Gew.-%, noch besser von 15 bis 40 Gew.-% vorhanden ist, wobei alle Bereiche in Bezug zum Gewicht der Zusammensetzung (G_{F}) stehen.

8. Das Verfahren nach Anspruch 6 oder 7, wobei die zumindest eine Flüssigölkomponente zumindest ein Pflanzenöl umfasst, ausgewählt aus der Gruppe von Rapsöl, Rapsöl mit hohem Fettsäuregehalt, Maiskeimöl, Sojaöl, Sonnenblumenkernöl, Sonnenblumenkernöl mit hohem Fettsäuregehalt, Baumwollsamenöl, Maisöl, Olivenöl, Haselnussöl, Erdnussöl, Palmöl mit hohem Fettsäuregehalt, flüssigen Fraktionen von Palmöl oder Sheabutter, einer Mischung von zwei oder mehreren dieser Flüssigöle und/oder Fraktionen davon.

9. Das Verfahren nach Anspruch 6 oder 7, wobei die zumindest eine Hart- oder Halbhartfettkomponente ein Pflanzenfett umfasst, ausgewählt aus der Gruppe bestehend aus Kakaobutter, Sheabutter, Illipébutter, Kokumfett, Salfett, Allanblackia-Fett, Mangokernfett, einem enzymatisch zubereiteten Fett, das mindestens 35 Gew.-% S2U-Triglyceride enthält, oder einer Fraktion davon, oder einer Mischung von zwei oder mehr der vorgenannten Fette oder Fraktionen davon.

10. Das Verfahren nach Anspruch 6, 7 oder 9, wobei zumindest eine der Hart- oder Halbhartfettkomponenten mit einem Steigschmelzpunkt von mindestens 25 °C durch Fraktionierung oder Umesterung erhalten wird, alternativ durch eine Kombination von Fraktionierung gefolgt von Umesterung, oder durch Umesterung gefolgt von Fraktionierung.

11. Das Verfahren nach Anspruch 10, wobei die Umesterung eine chemische oder enzymatische Umesterung ist.

12. Das Verfahren nach irgendeinem der Ansprüche 1 bis 11, wobei die Zusammensetzung (G_{F}) mindestens ein laurinsäurehaltiges Öl in einer Menge von höchstens 20 Gew.-%, noch besser von 1 bis 20 Gew.-%, sogar noch besser von 4 bis 15 Gew.-%, am besten von 3 bis 10 Gew.-%, in Bezug auf das Gesamtgewicht der Zusammensetzung (G_{F}), umfasst.

13. Das Verfahren nach Anspruch 12, wobei das laurinsäurehaltige Öl mit einem Hart- oder Halbhartfett kombiniert wird, wodurch eine Mischung gebildet wird, gefolgt von einer Umesterung der Mischung.

14. Das Verfahren nach irgendeinem der Ansprüche 1 bis 13, wobei die Zusammensetzung (G_{F}) im Wesentlichen frei von Öl- oder Fettkomponenten ist, die von genetisch modifizierten Quellen abgeleitet sind, indem sie einen Gehalt der Öl- oder Fettkomponenten in Bezug auf das Gesamtgewicht der Zusammensetzung (G_{F}) hat, der niedriger als 0,9 Gew.-% ist.

15. Das Verfahren nach irgendeinem der Ansprüche 1 bis 13, wobei die Zusammensetzung (G_{F}) im Wesentlichen frei von hydrogenierten Öl- oder Fettkomponenten ist, indem sie einen Gehalt der hydrogenierten Öl- oder Fettkomponenten, in Bezug auf das Gesamtgewicht der Zusammensetzung (G_{F}), hat, der niedriger als 2,5 Gew.-%, insbesondere niedriger als 2,0 Gew.-% ist.

16. Das Verfahren nach irgendeinem der Ansprüche 1 bis 15, wobei das frittierte Produkt (FLP) ausgewählt ist aus einer Gruppe bestehend aus einem frittierten Teigprodukt, einem frittierten Getreideprodukt, einem frittierten Fleischprodukt, einem frittierten Gemüseprodukt, einem frittierten Kartoffelprodukt, einem frittierten Meeresfrüchte- oder Fischprodukt, einem frittierten Obstprodukt.

17. Das Verfahren nach Anspruch 16, wobei das frittierte Teigprodukt ein Donut oder ein donutähnliches Produkt ist, wobei das donutähnliche Produkt jedes essbare Produkt ist, das nicht die übliche kreisförmige Donutform hat, das aber auf ähnliche Weise hergestellt wird, basierend auf einer Donutmischung oder basierend auf einer Mischung ähnlich einer Donutmischung, insbesondere einer Mischung aus Mehl, Wasser und optionalen Zutaten wie Zucker, Hefe, Milch, Kondensmilch, Milchpulver, Butter, Margarine, Schmalz, Eier, Eigelb, Salz, Backpulver, Aromastoffe, Vanillezucker, frisches oder getrocknetes Obst wie Trauben, Äpfel, Kirschen, Bananen.

18. Das Verfahren nach irgendeinem der Ansprüche 1 bis 17, wobei das Verfahren das Aussetzen des essbaren Substrats dem Frittierverfahren bei einer Temperatur im Bereich von 150 °C bis 210 °C im Frittieröl oder -fett umfasst, optional gefolgt von einem Abkühlen des frittierten Produkts (FLP) auf eine Temperatur unter 40 °C, bevorzugt unter 35 °C.

19. Verwendung einer Glyceridzusammensetzung (G_{F}) als ein Frittieröl oder -fett in einem Verfahren zur Herstellung eines frittierten Produkts (FLP), wobei die Glyceridzusammensetzung (G_{F}) in Bezug auf das Gesamtgewicht der Glyceridzusammensetzung (G_{F}) Folgendes umfasst:
a) von 10 bis 40 Gew.-%, bevorzugt von 15 bis 35 Gew.-%, bevorzugt von 17 bis 32 Gew.-%, bevorzugt von 17 bis 25 Gew.-% gesättigte Fettsäurereste mit 4 bis 24 Kohlenstoffatomen (SAFA),
b) weniger als 10 Gew.-%, bevorzugt weniger als 5 Gew.-%, noch besser weniger als 2 Gew.-% trans-ungesättigte Fettsäurereste (TFA),
c) C16:0- und C18:0-Fettsäurereste in einem Gewichtsverhältnis C18:0/C16:0 von mindestens 0,7, bevorzugt mindestens 1,0, noch besser mindestens 1,5, am besten mindestens 2,
d) von 35 bis 75 Gew.-% UUU-Triglyceride (U3), bevorzugt von 40 bis 70 Gew.-% U3, bevorzugt von 45 bis 65 Gew.-% U3, bevorzugt von 45 bis 63 Gew.-% U3,
e) S2U-Triglyceride (S2U) und SSS-Triglyceride (S3), wobei die Summe der Mengen von S2U und S3 von 6 bis 50 Gew.-% beträgt, bevorzugt von 8 bis 40 Gew.-%, bevorzugt von 8 bis 35 Gew.-%, bevorzugt von 15 bis 35 Gew.-%, und wobei das Gewichtsverhältnis S2U/S3 höher als 1 ist, und
f) von 8 bis 28 Gew.-%, bevorzugt 10 bis 25 Gew.-%, noch besser 12 bis 20 Gew.-% SU2-Triglyceride (SU2), und
wobei U für einen ungesättigten Fettsäurerest mit 16 bis 20 Kohlenstoffatomen steht und S für einen gesättigten Fettsäurerest mit 16 bis 20 Kohlenstoffatomen steht, und wobei die Glyceridzusammensetzung (G_{F}) bevorzugt im Wesentlichen frei von hydrogenierten Fettkomponenten ist, indem sie einen Gehalt der hydrogenierten Fettkomponenten, in Bezug auf das Gesamtgewicht der Zusammensetzung (G_{F}), hat, der weniger als 2,5 Gew.-%, insbesondere weniger als 2,0 Gew.-% beträgt.

20. Die Verwendung nach Anspruch 19, wobei das Verfahren ein Frittierverfahren ist, auf das optional ein Überzugsschritt folgt.

21. Die Verwendung nach Anspruch 19 oder Anspruch 20, wobei das Verfahren ein Frittierverfahren ist, auf das das Überziehen, Füllen und/oder Garnieren des frittierten Produkts (FLP) folgt.

## Revendications

1. Processus de fabrication d'un produit alimentaire frit (DFP), comprenant la soumission d'un substrat comestible [substrat (E), ci-après] à un processus de friture à une température d'au moins 130 °C, de préférence d'au moins 160 °C, plus préférentiellement d'au moins 170 °C dans une huile ou une graisse de friture dans laquelle la composition de glycérides [composition (G_{F}), ci-après] de ladite huile ou graisse de friture comprend par rapport au poids total de la composition (G_{F}) :
a) de 10 à 40 % en poids de résidus d'acides gras saturés (AGS) présentant de 4 à 24 atomes de carbone,
b) moins de 10 % en poids de résidus d'acides gras insaturés trans (AGT),
c) des résidus d'acides gras C16:0 et C18:0 dans un rapport pondéral C18:0/C16:0 d'au moins 0,7,
d) de 35 à 75 % en poids de triglycérides UUU [U3, ci-après],
e) des triglycérides S2U [S2U, ci-après] et des triglycérides SSS [S3, ci-après] dans lequel la somme des quantités de S2U et S3 est de 6 à 50 % en poids, et dans lequel le rapport pondéral de S2U/S3 est supérieur à 1, et
f) de 8 à 28 % en poids de triglycérides SU2 [SU2, ci-après],
dans lequel U représente un résidu d'acide gras insaturé présentant de 16 à 20 atomes de carbone et S représente un résidu d'acide gras saturé présentant de 16 à 20 atomes de carbone.

2. Processus selon la revendication 1, dans lequel la composition (G_{F}) de l'huile ou de la graisse de friture est en outre **caractérisée par** au moins l'une des caractéristiques suivantes :
d) de 40 à 70 % en poids de U3, de préférence de 45 à 65 % en poids de U3, de préférence de 45 à 63 % en poids de U3,
e) la somme des quantités de S2U et S3 est de 8 à 40 % en poids, de préférence de 8 à 35 % en poids, de préférence de 15 à 35 % en poids, et dans lequel le rapport pondéral de S2U/S3 est supérieur à 1, et
f) de 10 à 25 % en poids de SU2, de préférence de 12 à 20 % en poids de SU2, dans lequel tous les % en poids sont basés sur le poids total de la composition (G_{F}).

3. Processus selon la revendication 1 ou la revendication 2, dans lequel la composition (G_{F}) comprend des triglycérides SSU et SUS dans un rapport pondéral SSU/SUS d'au moins 1, de préférence d'au moins 1,5.

4. Processus selon l'une quelconque des revendications 1 à 3, dans lequel la composition (G_{F}) comprend des résidus C18:1 en une quantité d'au moins 75 % en poids, plus préférentiellement d'au moins 80 % en poids, le plus préférentiellement d'au moins 85 % en poids, sur la base du poids total de résidus d'acides gras insaturés.

5. Processus selon l'une quelconque des revendications 1 à 4, dans lequel la composition (G_{F}) comprend un résidu d'acide gras saturé et insaturé présentant 18 atomes de carbone sélectionné parmi C18:0, C18:1, C18:2, C18:3 et des mélanges de ceux-ci, en une quantité d'au moins 65 % en poids, de préférence d'au moins 70 % en poids, plus préférentiellement d'au moins 75 % en poids, par rapport au poids total de la composition (G_{F}).

6. Processus selon l'une quelconque des revendications 1 à 5, dans lequel la composition (G_{F}) comprend au moins un composant gras dur ou semi-dur présentant un point de fusion par glissement d'au moins 25 °C et au moins un composant huileux liquide présentant un point de fusion par glissement d'au plus 25 °C.

7. Processus selon la revendication 6, dans lequel la quantité du composant huileux liquide est présente dans la plage de 40 à 90 % en poids, de préférence de 50 à 90 % en poids, plus préférentiellement de 60 à 85 % en poids et la quantité de composant gras dur ou semi-dur est présente dans la plage de 10 à 60 % en poids, de préférence de 10 à 50 % en poids, plus préférentiellement de 15 à 40 % en poids, toutes les plages étant par rapport au poids de la composition (GF).

8. Processus selon la revendication 6 ou 7, dans lequel le au moins un composant huileux liquide comprend au moins une huile végétale sélectionnée dans le groupe comprenant l'huile de colza, l'huile de colza à haute teneur en acide oléique, l'huile de maïs, l'huile de soja, l'huile de tournesol, l'huile de tournesol à haute teneur en acide oléique, l'huile de coton, l'huile de maïs, l'huile d'olive, l'huile de noisette, l'huile d'arachide, l'huile de palme à haute teneur en acide oléique, les fractions liquides d'huile de palme ou de beurre de karité, un mélange de deux ou plusieurs de ces huiles liquides et/ou fractions de celles-ci.

9. Processus selon la revendication 6 ou 7, dans lequel le au moins un composant gras dur ou semi-dur comprend une graisse végétale sélectionnée dans le groupe comprenant le beurre de cacao, le beurre de karité, le beurre d'illipé, la graisse de kokum, la graisse de sal, la graisse d'allanblackia, la graisse de noyau de mangue, une graisse préparée enzymatiquement contenant au moins 35 % en poids de triglycérides S2U, ou une fraction de ceux-ci, ou un mélange de deux ou plusieurs des graisses ou fractions de celles-ci mentionnées ci-dessus.

10. Processus selon la revendication 6, 7 ou 9, dans lequel au moins un des composants gras durs ou semi-durs présentant un point de fusion par glissement d'au moins 25 °C est obtenu par fractionnement ou interestérification, alternativement par une combinaison de fractionnement suivi d'interestérification, ou par interestérification suivie d'un fractionnement.

11. Processus selon la revendication 10, dans lequel l'interestérification est une interestérification chimique ou enzymatique.

12. Processus selon l'une quelconque des revendications 1 à 11, dans lequel la composition (G_{F}) comprend au moins une huile laurique en une quantité d'au plus 20 % en poids, plus préférentiellement de 1 à 20 % en poids, encore plus préférentiellement de 4 à 15 % en poids, le plus préférentiellement de 3 à 10 % en poids, par rapport au poids total de la composition (G_{F}).

13. Processus selon la revendication 12, dans lequel l'huile laurique est combinée avec une graisse dure ou semi-dure formant ainsi un mélange, suivi d'une interestérification dudit mélange.

14. Processus selon l'une quelconque des revendications 1 à 13, dans lequel la composition (G_{F}) est sensiblement exempte de composants huileux ou gras dérivés de sources génétiquement modifiées, en présentant une teneur en dits composants huileux ou gras par rapport au poids total de la composition (G_{F}) qui est inférieure à 0,9 % en poids.

15. Processus selon l'une quelconque des revendications 1 à 13, dans lequel la composition (G_{F}) est sensiblement exempte de composants huileux ou gras hydrogénés, en présentant une teneur en dits composants huileux ou gras hydrogénés, par rapport au poids total de la composition (G_{F}), qui est inférieure à 2,5 % en poids, en particulier inférieure à 2,0 % en poids.

16. Processus selon l'une quelconque des revendications 1 à 15, dans lequel ledit produit frit (DFP) est sélectionné dans un groupe consistant en un produit de pâte frite, un produit de céréales frit, un produit de viande frit, un produit de légumes frit, un produit de pommes de terre frit, un produit de fruits de mer ou de poisson frit, un produit de fruits frit.

17. Processus selon la revendication 16, dans lequel le produit de pâte frite est un beignet ou un produit de type beignet, dans lequel le produit de type beignet est tout produit comestible qui ne présente pas la forme habituelle de beignet circulaire, mais qui est fabriqué de manière similaire, à base d'un mélange pour beignet ou à base d'un mélange similaire à un mélange pour beignet, en particulier un mélange de farine, d'eau et d'ingrédients facultatifs tels que du sucre, de la levure, du lait, du lait concentré, du lait en poudre, du beurre, de la margarine, de la graisse alimentaire, des œufs, du jaune d'œuf, du sel, de la levure chimique, des arômes, du sucre vanillé, des fruits frais ou secs comme des raisins, des pommes, des cerises, des bananes.

18. Processus selon l'une quelconque des revendications 1 à 17, dans lequel ledit processus comprend la soumission du substrat comestible au processus de friture à une température dans la plage de 150 °C à 210 °C dans l'huile ou la graisse de friture, éventuellement suivie d'un refroidissement du produit frit (DFP) à une température inférieure à 40 °C, de préférence inférieure à 35 °C.

19. Utilisation d'une composition de glycérides (G_{F}) comme huile ou graisse de friture dans un processus de fabrication d'un produit frit (DFP), dans laquelle ladite composition de glycérides (G_{F}) comprend par rapport au poids total de la composition de glycérides (G_{F}) :
a) de 10 à 40 % en poids de résidus d'acides gras saturés (AGS) présentant de 4 à 24 atomes de carbone, de préférence de 15 à 35 % en poids, de préférence de 17 à 32 % en poids, de préférence de 17 à 25 % en poids,
b) moins de 10 % en poids de résidus d'acides gras insaturés trans (AGT), de préférence moins de 5 % en poids, plus préférentiellement moins de 2 % en poids,
c) des résidus d'acides gras C16:0 et C18:0 dans un rapport pondéral C18:0/C16:0 d'au moins 0,7, de préférence d'au moins 1,0, plus préférentiellement d'au moins 1,5, le plus préférentiellement d'au moins 2,
d) de 35 à 75 % en poids de triglycérides UUU (U3), de préférence de 40 à 70 % en poids de U3, de préférence de 45 à 65 % en poids de U3, de préférence de 45 à 63 % en poids de U3,
e) des triglycérides S2U (S2U) et des triglycérides SSS (S3), dans laquelle la somme des quantités de S2U et S3 est de 6 à 50 % en poids, de préférence de 8 à 40 % en poids, de préférence de 8 à 35 % en poids, de préférence de 15 à 35 % en poids, et dans lequel le rapport pondéral de S2U/S3 est supérieur à 1, et
f) de 8 à 28 % en poids de triglycérides SU2 (SU2), de préférence de 10 à 25 % en poids, plus préférentiellement de 12 à 20 % en poids, et
dans laquelle U représente un résidu d'acide gras insaturé présentant de 16 à 20 atomes de carbone et S représente un résidu d'acide gras saturé présentant de 16 à 20 atomes de carbone, et dans laquelle ladite composition de glycérides (G_{F}) est de préférence sensiblement exempte de composants gras hydrogénés, en présentant une teneur en dits composants gras hydrogénés, par rapport au poids total de la composition (G_{F}), qui est inférieure à 2,5 % en poids, en particulier inférieure à 2,0 % en poids.

20. Utilisation selon la revendication 19, dans laquelle ledit processus est un processus de friture qui est éventuellement suivi d'une étape d'enrobage.

21. Utilisation selon la revendication 19 ou la revendication 20, dans laquelle ledit processus est un processus de friture qui est suivi par l'enrobage, le remplissage, et/ou la garniture du produit frit (DFP).
